(19) Europäisches Patentamt
European Patent Office
Office européen des brevets

(11) Veröffentlichungsnummer: **0 047 364**
**B1**

(12) # EUROPÄISCHE PATENTSCHRIFT

(45) Veröffentlichungstag der Patentschrift: **29.05.85**

(51) Int. Cl.[4]: **C 08 L 63/00**, C 09 D 11/02

(21) Anmeldenummer: **81104944.4**

(22) Anmeldetag: **26.06.81**

(54) **Verwendung von härtbaren Kunstharzmischungen für Druckfarben.**

(30) Priorität: **27.08.80 DE 3032215**

(43) Veröffentlichungstag der Anmeldung:
**17.03.82 Patentblatt 82/11**

(45) Bekanntmachung des Hinweises auf die Patenterteilung:
**29.05.85 Patentblatt 85/22**

(84) Benannte Vertragsstaaten:
**BE CH DE FR GB IT LI LU NL SE**

(56) Entgegenhaltungen:
**CH - A - 492 563**
**FR - A - 1 109 472**
**GB - A - 882 889**
**GB - A - 1 281 805**
**US - A - 2 865 870**
**US - A - 4 122 234**

(73) Patentinhaber: **SCHERING AKTIENGESELLSCHAFT**
**Berlin und Bergkamen, Waldstrasse 14 Postfach 15 40,**
**D-4709 Bergkamen (DE)**

(72) Erfinder: **Krase, Horst, Unterster Kamp 14,**
**D-4701 Hamm 1 Rhynern (DE)**
Erfinder: **Krull, Olaf, Lessingstrasse 43,**
**D-4619 Bergkamen (DE)**

EP 0 047 364 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft die Verwendung von härtbaren Kunstharzmischungen für Oberflächenbeschichtungen und für Druckfarben für den Tief-, Flexo- und Siebdruck, bestehend aus Epoxidharz/Härter-Mischungen und Cellulose-Derivaten.

Der vor allem in den letzten Jahren sprunghaft gestiegene Bedarf an Verpackungsmaterialien, insbesondere in der Konsumgüter- und Lebensmittelindustrie, hat geänderte Verpackungstechniken erforderlich gemacht. Aufgrund dieser geänderten Verpackungstechniken sind auch die Anforderungen der Praxis an die verwendeten Beschichtungen und Druckfarben rapide gestiegen. Die erforderlichen hohen Temperaturbeständigkeiten für die immer kürzer werdenden Versiegelungszeiten sowie die aufgrund verschärfter Lebensmittelgesetze erforderlichen Beständigkeiten gegenüber Wasser, Säuren, Basen und insbesondere Fetten und Ölen sind bei den bislang verwendeten thermoplastischen Bindemitteln nicht mehr in ausreichendem Maße gegeben.

Bei der Verwendung von zweikomponentigen Farben auf der Basis von Epoxidharz/Härter-Systemen wurde zwar die Chemikalienbeständigkeit der Überzüge verbessert, jedoch ist die Druckgeschwindigkeit für die Praxis nicht immer ausreichend schnell genug. Systeme dieser Art werden in der DE-AS 1 494 525 beschrieben. Zur Erzielung klarer Lösungen mußte darüber hinaus das Lösungsmittel einen relativ hohen Anteil an Aromaten enthalten.

Aus Gründen der in jüngerer Zeit immer stärker in den Vordergrund getretenen Berücksichtigung des Arbeitsplatz- und Umweltschutzes fordert die Praxis aber Bindemittel für Beschichtungen und Druckfarben, welche in aromatenfreien Lösungsmitteln gut löslich sind. Der Einsatz von Aromaten ist auch aus technologischen Gründen unerwünscht, da es hierbei zum Anquellen der im Flexodruck verwendeten Gummi- und Polymer-Klischees kommen kann.

In der DE-AS 2 733 597 und der DE-OS 2 811 700 werden Epoxidharz/Härter-Mischungen beschrieben, welche in aromatenfreien Lösungsmitteln klar löslich sind und welche auch den Anforderungen der Praxis hinsichtlich Filmeigenschaften und Chemikalienbeständigkeiten weitgehend entsprechen. Hinsichtlich Druckgeschwindigkeit und hinsichtlich der Siegelfestigkeit der Druckfilme sind jedoch noch Verbesserungen wünschenswert.

Zum bekannten Stand der Technik gehören auch Druckfarben, welche große Anteile an Cellulose-Derivaten als Bindemittel mitverwenden. Zur Erzielung einer ausreichenden Haftung auf dem zu bedruckenden Untergrund ist aber die Mitverwendung von thermoplastischen Harzen und/oder Weichmachern als Haftvermittler erforderlich. Mit diesen Systemen ist jedoch keine ausreichend hohe Siegelbeständigkeit und vor allem Chemikalienbeständigkeit zu erzielen. Zweikomponentendruckfarben auf Basis von Cellulose-Derivaten und Isocyanaten geben in der Praxis zwar gute Filme, jedoch ist die Anwendung dieser Systeme nicht ganz unproblematisch, da sie einmal feuchtigkeitsempfindlich sind und zum anderen die auf diesem Gebiet hauptsächlich verwendeten hydroxylgruppenhaltigen Lösungsmittel, insbesondere die niedrigen Alkohole wie Methanol, Äthanol und Isopropanol, nicht verwendet werden können.

In der US-PS 2 865 870 werden Überzugsmittel auf Basis von Epoxidharz/Härter-Mischungen und Celluloseaceto-Butyraten beschrieben. In diesem System wird eine Lösung eines festen Epoxidharzes und eines Polyaminoamids mit einem Aminwasserstoffäquivalentgewicht von 237 verwendet, welches keine klaren Filme ergibt und in der Hitze ausgehärtet werden muß.

Aufgabe der vorliegenden Erfindung war es, härtbare in aromatenfreien Lösungsmitteln gut lösliche Bindemittel-Systeme zu finden, die nach Abdunsten der Lösungsmittel physikalisch trockene und klare Filme ergeben, die bei Raumtemperatur bzw. wenig erhöhter Temperatur aushärten, die hohe Siegelfestigkeiten aufweisen und auf schnell laufenden Druckmaschinen verarbeitet werden können, wobei die Beschichtungen bzw. Druckfilme den Anforderungen der Praxis hinsichtlich Chemikalienbeständigkeit entsprechen.

Diese Aufgabe wird erfindungsgemäß gelöst durch die Verwendung von härtbaren Kunstharzmischungen, die nach Abdunsten des Lösungsmittels physikalisch trockene und klare Filme ergeben und die bei Raumtemperatur bzw. wenig erhöhter Temperatur aushärten, für Druckfarben für den Tief-, Flexo- und Siebdruck, bestehend aus Kunstharzmischungen als Bindemittel, bestehend aus

A) Glycidylverbindungen mit mehr als 1 Epoxidgruppe pro Molekül und Epoxidwerten von 0,35 bis 0,70 und

B) Celluloseäthern und/oder Celluloseestern in Mengen von 0,5 : 1 bis 5 : 1, bezogen auf das Verhältnis Epoxidharz/Härtermischungen (A + C) : Cellulosederivaten, und

C) einer oder mehreren Aminverbindungen mit mindestens zwei reaktiven Aminwasserstoffatomen aus der Gruppe der

   a) aliphatischen Polyamine der allgemeinen Formel

$$R'—\left[HN—(CHR)_x—NH\right]—R' \qquad (I)$$

in welcher R ein Alkylrest mit 1–4 Kohlenstoffatomen oder H, R', H oder der Rest

$-CH_2-CH_2-CN$, und x ein Wert von 2 – 6 sein kann,

b) Polyalkylenpolyamine der allgemeinen Formel

$$H_2N-\left[(CHR)_xNH\right]_y-H \qquad (II)$$

in welcher R ein Alkylrest mit 1 – 4 Kohlenstoffatomen oder H sein und x die Werte 2 – 6 und y die Werte 2 – 4 haben kann,

c) Polyätheramine der allgemeinen Formel

$$H_2N-(CH_2)_n-O-(R^1-O)_z(CH_2)_n-NH_2 \qquad (III)$$

in welcher n ein Wert von 3 – 5, z ein Wert von 0, 1, 2 oder 3 und $R^1$ ein gegebenenfalls durch einen Alkylrest mit 1 – 4 Kohlenstoffatomen substituierter Alkylenrest mit 1 – 12 Kohlenstoffatomen sein kann,

d) cycloaliphatischen Polyamine der allgemeinen Formel

$$H_2N-R^2-NH_2 \qquad (IV)$$

in welcher $R^2$ der Rest

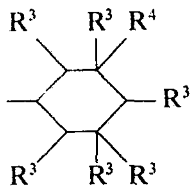

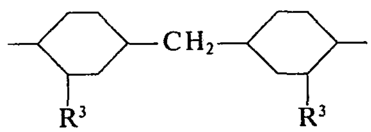

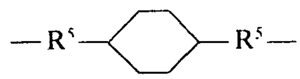

sein kann, mit $R^3=H$ oder $CH_3-$, $R^4=-CH_2-$ und $R^5$ ein Alkylenrest, der gleich oder verschieden und 0,1 oder 2mal vorhanden sein kann und 1 – 3 Kohlenstoffatome haben kann,

e) Aminoamidverbindungen und/oder imidazolingruppenhaltigen Aminoamidverbindungen mit Aminwasserstoffäquivalentgewichten von 90 – 175,

f) Phenol-Formaldehyd-Amin-Kondensationsprodukte (Mannichbasen) mit mindestens zwei reaktiven Aminwasserstoffatomen,

g) Addukte der Aminverbindungen gemäß Ca) – Cf), hergestellt durch Umsetzung von überschüssigem Amin mit Glycidylverbindungen gemäß A)

D) aromatenfreien Lösungsmitteln und gegebenenfalls

E) Pigmenten, Farbstoffen, Beschleunigern, reaktiven Verdünnern, Streck- und Verlaufsmitteln.

Ein weiterer Gegenstand der Erfindung ist ein Verfahren zum Beschichten oder Bedrucken von Oberflächen, welches dadurch gekennzeichnet ist, daß als Bindemittel Kunstharzmischungen gemäß den Ansprüchen verwendet werden.

Ein weiterer Gegenstand der Erfindung ist ein Mittel für das Verfahren zum Beschichten oder Bedrucken von Oberflächen, welches dadurch gekennzeichnet ist, daß als Bindemittel Kunstharzmischungen gemäß den Ansprüchen verwendet werden.

Die erfindungsgemäß mitverwendeten Epoxidharze, welche sowohl allein als auch in Mischung eingesetzt werden können, sind flüssige bis halbfeste aromatische Glycidyläther mit mehr als einer Epoxidgruppe pro Molekül, die sich von mehrwertigen Phenolen, insbesondere Bisphenolen sowie Novolaken, ableiten, oder flüssige aliphatische Glycidyläther, die sich von aliphatischen mehrwertigen Alkanolen, insbesondere Äthylenglykol, Propylenglykol, Butylenglykol, Dipropylenglykol, Tripropylenglykol, Tetrapropylenglykol, Nonapropylenglykol, Tetraäthylenglykol, Neopentylglykol, Glycerin, Pentaerythrit, und deren Epoxidwerte zwischen 0,30 und 0,7, insbesondere zwischen 0,50 und 0,6 liegen.

Zur Elastifizierung der Epoxidharze können gegebenenfalls neben den genannten kurzkettigen Alkanolen auch handelsübliche höhermolekulare Polyalkylenpolyätherpolyole auf Basis von insbesondere Äthylenglykol und Propylenglykol mitverwendet werden. Der Anteil dieser mitverwendeten Alkanole richtet sich nach deren Molgewicht und dem gewünschten Elastifizierungsgrad des Epoxidharzes.

Die erfindungsgemäß mitverwendeten Cellulose-Derivate sind handelsübliche Celluloseäther und Celluloseester, die durch Reaktion von Cellulose mit Alkylhalogeniden (Äther oder niedrigen Monocarbonsäuren (Ester) erhalten werden. Je nach Verhältnis der Reaktionskomponenten werden die Cellulose-Derivate mit verschiedenen Substitutionsgraden erhalten.

Erfindungsgemäß bevorzugt sind die in niedrig siedenden organischen Lösungsmitteln löslichen Produkte, wie insbesondere

Celluloseäther wie Äthylcellulose mit einem Substitutionsgrad von 2,15 bis 2,60, vorwiegend 2,42

bis 2,60,
Celluloseester wie Celluloseacetat mit einem Substitutionsgrad von 2,2 bis 2,7,
Celluloseacetobutyrat mit einem Acetylgehalt von 2 bis 30,5%, einem Butyrylgehalt von 15 bis 54% und einem Hydroxylgruppengehalt von 0,45 bis 4,7%, insbesondere jedoch
Celluloseacetopropionat mit einem Acetylgehalt von 1,8 bis 3,6%, einem Propionylgehalt von 40 bis 46,5% und einem Hydroxylgruppengehalt von 1,6 bis 5,5%.

Diese Cellulose-Derivate werden in der erfindungsgemäß bevorzugten Verwendung in Druckfarbenbindemitteln in Mengen von Epoxidharz/Härtermischungen (A + C) : Cellulose-Derivaten (R) von ca. 0,5 : 1 bis 5 : 1, insbesondere 1 : 1 bis 3 : 1, mitverwendet.

Hohe Anteile an Cellulose-Derivaten wirken sich günstig aus in Richtung auf schnelltrocknende klebfreie Oberflächen, wie sie für schnellaufende Druckmaschinen bei dem Druck von Rolle auf Rolle unbedingt erforderlich sind. Zu hohe Anteile beeinträchtigen jedoch die Haftung des Films auf dem Untergrund.

Die Menge der mitverwendeten Cellulose-Derivate ist bei Druckfarben bei Druck von Rolle auf Rolle aufgrund der erforderlichen Druckgeschwindigkeit eng begrenzt, während beim Siebdruckverfahren der Bereich weniger kritisch ist.

Bei der erfindungsgemäß ebenfalls möglichen Verwendung als Anstriche, welche maschinell bzw. manuell aufgetragen werden, ist eine spontane Oberflächenklebfreiheit nicht immer erforderlich bzw. gewünscht, so daß der Anteil an Cellulose-Derivaten den Anforderungen der Praxis angepaßt werden kann, d. h., Anteile von 10 : 1 bis 15 : 1 sind durchaus praktikabel.

Während Äthylcellulose und Celluloseacetat nicht mit anderen Cellulosederivaten verträglich sind, können Celluloseacetobutyrat und Celluloseacetopropionat auch untereinander gemischt werden.

Die erfindungsgemäß als Härtungsmittel mitverwendeten Aminverbindungen sind

Äthylendiamin, Propylendiamin, Hexamethylendiamin, Trimethylhexamethylendiamin, sowie die N und N,N'-Cyanäthylierungsprodukte dieser Diamine;
Diäthylentriamin, Dipropylentriamin, Triäthylentetramin, Tetraäthylenpentamin, 3-(2-Aminoäthyl)-Aminopropylamin, Bis(3-Aminopropyl)-Äthylendiamin;
1,7-Diamino-4-oxa-heptan, 1,7-Diamino-3,5-dioxa-heptan, 1,10-Diamino-4,7-dioxa-decan, 1,10-Diamino-4,7-dioxa-5-methyldecan, 1,11-Diamino-6-oxa-undecan, 1,11-Diamino-4,8-dioxaundecan, 1,11-Diamino-4,8-dioxa-5-methyl-undecan, 1,11-Diamino-4,8-dioxa-5,6-dimethyl-7-propionyl-undecan, 1,12-Diamino-4,9-dioxa-dodecan, 1,13-Diamino-4,10-dioxa-tridecan, 1,13-Diamino-4,7,10-trioxa-5,8-dimethyl-tridecan, 1,14-Diamino-4,11-dioxa-tetradecan, 1,14-Diamino-4,7,10-trioxatetradecan, 1,16-Diamino-4,7,10,13-tetraoxa-hexadecan, 1,20-Diamino-4,17-dioxa-eicosan;
1-Amino-4($\gamma$-aminopropyl)cyclohexan, 3-Aminomethyl-3,5,5-trimethyl-cyclohexylamin, 4,4'-Diaminodicyclohexyl-methan, 3,3'-Dimethyl-4,4'-diaminodicyclohexyl-methan, Bis-(aminomethyl)cyclohexan, 1,4-Diamino-cyclohexan;
Polyamide und imidazolingruppenhaltige Polyaminoamide auf Basis mono- und polymerer Fettsäure und überschüssigen Aminen mit Aminwasserstoffäquivalentgewichten von 90 – 175.

Als Aminoamide und imidazolingruppenhaltige Aminoamide sind die als Härtungsmittel für Epoxidverbindungen zum Stand der Technik gehörenden und in die Praxis eingeführten Verbindungen, wie sie beispielsweise aus den deutschen Patentschriften 972 757, 1 074 856, den deutschen Auslegeschriften 1 041 246, 1 089 544, 1 106 495, 1 295 869, 1 250 918, den britischen Patentschriften 803 517, 810 248, 873 224, 865 656, 956 709, der belgischen Patentschrift 593 299, der französischen Patentschrift 1 264 244, sowie den US-Patentschriften 2 705 223, 2 712 001, 2 881 194, 2 966 478, 3 002 941, 3 062 773 und 3 188 566 bekannt sind, geeignet.

Als vorteilhaft für die erfindungsgemäße Verwendung haben sich Aminoamide und imidazolingruppenhaltige Aminoamide erwiesen, welche hergestellt werden durch Umsetzung von

e1) Monocarbonsäuren, wie geradkettigen oder verzweigten Alkylcarbonsäuren mit 16 bis 22, bevorzugt mit 18 C-Atomen, wie insbesondere die natürlichen Fettsäuren wie Palmitin-, Stearin-, Öl-, Linol-, Linolen-, Tallölfettsäure oder
e2) die durch Polymerisation von ungesättigten natürlichen und synthetischen einbasischen aliphatischen Fettsäuren mit 16 – 22 Kohlenstoffatomen, bevorzugt 18 Kohlenstofatomen, nach bekannten Methoden erhältlichen sogenannten dimeren Fettsäuren (vgl. z. B. DE-OS 1 443 938, DE-OS 1 443 968, DE-PS 2 118 702 und DE-AS 1 280 852). Typische im Handel erhältliche polymerisierte Fettsäuren haben etwa folgende Zusammensetzung:

| | |
|---|---|
| monomere Säuren | 5 – 15 Gew.-% |
| dimere Säuren | 60 – 80 Gew.-% |
| trimere und höherfunktionelle Säuren | 10 – 35 Gew.-% |

Es können jedoch auch Fettsäuren verwendet werden, deren trimerer und höherfunktioneller Gehalt oder deren Dimeranteil durch geeignete Destillationsverfahren angereichert worden ist oder Fettsäuren, die nach bekannten Verfahren hydriert worden sind oder

e3) aus ungesättigten höheren Fettsäuren mit 16–22, insbesondere 18 Kohlenstoffatomen oder deren Ester mit aromatischen Vinylverbindungen den durch Copolymerisation erhaltenen Carbonsäuren (z. B. GB-PS 803 517) oder die Additionsprodukte von Acrylsäure an höhere monomere Fettsäuren mit 16–22 C-Atomen, die durch Carboxylierung von ungesättigten monomeren Fettsäuren mit 16–22 C-Atomen erhaltenen Dicarbonsäuren oder

e4) Säuren, hergestellt durch Addition von Phenol bzw. dessen Substitutionsprodukten an ungesättigte Monocarbonsäuren wie Hydroxyphenylstearinsäure (z. B. DE-OS 1 543 754) oder 2,2-Bis-(hydroxyphenyl)-valeriansäure oder Additionsprodukte von Phenol an Polycarbonsäuren, wie dimere Fettsäure (z. B. US-PS 3 468 920)

mit Polyaminen im Verhältnis von Amingruppen zu Carboxylgruppen von $>1$.

Im allgemeinen werden die Säuren der obengenannten Gruppen für sich für die Kondensation mit den Polyaminen eingesetzt, man kann aber auch Mischungen verwenden. Eine besondere Bedeutung in der Technik haben die Polyaminoamide und Polyaminoimidazoline der unter e1) und e2) genannten monomeren bzw. polymeren Fettsäuren erlangt, die daher erfindungsgemäß bevorzugt eingesetzt werden.

Als erfindungsgemäß verwendete Aminkomponenten zur Herstellung der Polyaminoamide werden Polyamine wie

e5) Polyalkylenpolyamine der allgemeinen Formel II wie Polyäthylenpolyamine, wie Diäthylentriamin, Triäthylentetramin, Tetraäthylenpentamin oder Polypropylenpolyamin, sowie die durch Cyanäthylierung von Polyaminen, insbesondere des Äthylendiamins und anschließende Hydrierung erhaltenen Polyamine (Firmenprospekt der BASF AG, 1976) oder

e6) gegebenenfalls substituierte Alkylenpolyamine der allgemeinen Formel I wie Äthylendiamin, Propylendiamine, Butylendiamine, Hexylendiamine

oder Mischungen von zwei oder mehreren der unter e5) und e6) genannten Amine eingesetzt. Erfindungsgemäß bevorzugt werden die unter e5) genannten Polyamine eingesetzt.

Als erfindungsgemäß bevorzugte Aminoamide bzw. imidazolingruppenhaltige Aminoamide haben Aminwasserstoffäquivalentgewichte von 90 bis 175.

Als Mannichbasen im Sinne der vorstehenden Erfindung sind Umsetzungsprodukte aus Phenolen, Formaldehyd und mehrwertigen Aminen zu verstehen. Als Phenole können eingesetzt werden Monophenole wie Phenol, ortho-, metha-, para-Kresol, die isomeren Xylenole, para tertiär-Butyl-Phenol, para-Nonylphenol, $\alpha$-Naphthol, $\beta$-Naphthol sowie Di- und Polyphenole wie Resorcin, Hydrochinon, 4,4'-Dioxydiphenyl, 4,4'-Dioxydiphenyläther, 4,4'-Dioxydiphenylsulfon, 4,4'-Dioxydiphenylmethan, Bisphenol A, sowie die als Novolake bezeichneten Kondensationsprodukte aus Phenol und Formaldehyd.

Als mehrwertige Amine können die unter Ca) und Cb) genannten Diamine eingesetzt werden, insbesondere aber Hexamethylendiamin, Trimethylhexamethylendiamin, Diäthylentriamin, Triäthylentetramin und Xylylendiamin bzw. Mischungen dieser Amine. Ebenfalls geeignet sind die durch Aminaustausch hergestellten Mannichbasen, die in der DE-OS 2 805 853 beschrieben sind.

Die unter Ca) bis Cf) genannten Aminverbindungen können mit einem Teil der zur vollständigen Aushärtung benötigten Epoxidharze voradduktiert werden. Hierzu werden bevorzugt die niedrigviskosen aliphatischen und aromatischen Glycidyläther wie Neopentylglykoldiglycidyläther und/oder Bisphenol-A- bzw. F-Diglycidyläther eingesetzt. Der Adduktierungsgrad wird bestimmt von den jeweilig eingesetzten Amin- und Epoxidharzkomponenten und wird so gesteuert, daß die Gesamtmischungen klare Filme ergeben.

Die genannten Aminkomponenten gemäß C) können sowohl allein als auch miteinander oder untereinander gemischt eingesetzt werden.

Die Mitverwendung von auf diesem Gebiet üblichen alkoholischen, phenolischen und aminischen Beschleunigern ist bei Verwendung der Härtungsmittel nach Ca) bis Cd) und Cg) zur Erzielung einer schnellen Aushärtung bei Raumtemperatur erfindungsgemäß bevorzugt. Derartige Verbindungen sind z. B. Benzylalkohol, Furfurylalkohol, Nonylphenol, Para-tertiär-Butylphenol, Dimethylaminomethylphenol und Tris-(dimethylaminomethyl)phenol.

Falls erforderlich, können weiterhin die auf diesem Gebiet üblichen reaktiven Verdünner wie Kresylglycidyläther, p-tert.-Butylphenylglycidyläther, Phenylglycidyläther, Alkyl-Hexylglycidyläther mitverwendet werden.

Für die erfindungsgemäß verwendeten Mischungen werden die Lösungsmittel auch unter Berücksichtigung auf das in Anwendung kommende Druckverfahren ausgewählt.

So werden für Druckverfahren mit großen Druckgeschwindigkeiten (Rotationsdruck) schnell verdunstende Lösungsmittel wie Mischungen aus niedrigen aliphatischen Alkoholen mit 1–4 Kohlenstoffatomen, Estern wie Essigsäure-äthyl-, propyl-, isopropyl-, butyl-, isobutylester, Ketone wie Aceton, Methyläthylketon, Methylisobutylketon, Methyl-n-butylketon verwendet.

Für Druckverfahren mit geringen Druckgeschwindigkeiten, wie z. B. Siebdruckverfahren oder auch für Oberflächenbeschichtungen, können auch Lösungsmittel mit relativ langen Verdunstungszeiten wie die auf diesem Gebiet üblichen Glykoläther und -acetate, gegebenenfalls in Mischung mit anderen für die jeweiligen Druckverfahren geeigneten Lösungsmittel verwendet werden.

Mit dem erfindungsgemäßen Verfahren können anorganische und organische Substrate bedruckt bzw. beschichtet werden. Es kommen die in der Druckindustrie üblichen Folien in Frage aus z. B. Polyamiden, Polyestern oder Polyesteramiden, wärmeempfindlichen Folien aus z. B. Polyäthylen und Polypropylen, Co-Extrusionsfolien aus Polyäthylen und Polypropylen, nicht behandelte oder mit Polymeren beschichtete oder mit Nitrocellulose lackierte Zellglasfolien, Papier, Kartonagen und gegebenenfalls Polyvinylchlorid bzw. dessen Copolymerisate, sowie Metallfolien wie z. B. Aluminiumfolien. Kombinationen dieser Materialien sind gegebenenfalls auch möglich. Die Beschichtungen können auf den im Bausektor üblichen Materialien wie z. B. auf Beton, Metall, Holz, Kunststoffen vorgenommen werden.

## Herstellung der Formulierungen

### 1. Epoxidharzformulierungen

a) In einem Gemisch, bestehend aus 10,0 g Äthanol, 27,2 g Äthylacetat und 37,0 g Aceton werden 15,0 g Novolak-Epoxidharz (Epoxidwert = 0,56) und 10,8 g Celluloseacetopropionat unter Rühren und leichter Erwärmung gelöst.
Die Lösung ist nach dem Abkühlen gebrauchsfertig (Beispiel 16, Tabelle 3).

b) In einem Gemisch, bestehend aus 50,0 g Äthylacetat und 10,0 g Methyläthylketon werden 10,5 g Novolak-Epoxidharz (Epoxidwert 0,56), 10,5 g Bisphenol-A-Epoxidharz (Epoxidwert 0,52), 14,0 g Cellulosepropionat und 5,0 g Ketonharz unter Rühren und leichter Erwärmung gelöst. Nach dem Abkühlen erhält man eine gebrauchsfertige Formulierung, die eine ganz leichte Trübung aufweist, die aber auf den später erhaltenen Druckfilmglanz keinen Einfluß hat (Beispiel 28, Tabelle 3).

### 2. Härterformulierungen

a) In einem Gemisch, bestehend aus 7,0 g Äthanol, 6,0 g Äthylacetat und 5,5 g Aceton werden 2,7 g Dipropylentriamin durch Rühren gelöst und anschließend 3,8 g Bisphenol-A-Epoxidharz (Epoxidwert 0,52) zugegeben. Nach 3stündiger Erwärmung auf 40 – 50° C wird auf Raumtemperatur abgekühlt; die Härterlösung ist dann gebrauchsfertig (Beispiel 16, Tabelle 4).

b) In 17,1 g Äthanol werden 7,9 g Härter Nr. 13 (Tabelle 2) durch Rühren gelöst; die Lösung ist sofort gebrauchsfertig (Beispiel 28, Tabelle 4).

Gebrauchsfertige, im richtigen Mischungsverhältnis stehende Formulierungen erhält man, wenn zu jeweils 100 g der Lösungen nach 1a) bzw. 1b) 25 g der Lösungen nach 2a) bzw. 2b) dazugegeben und gut gemischt werden (Beispiele 16 und 28, Tabelle 5).

In gleicher Weise werden sämtliche in den Tabellen 3 und 4 aufgeführten Harz- und Härterformulierungen sowie die in Tabelle 5 aufgeführten Mischungen hergestellt.

## Herstellung der Druckfarben

Nach der Fertigstellung werden die Epoxidharzlösungen mit den in der Druckfarbenindustrie üblichen Dispergiergeräten pigmentiert. Hierfür können organische und anorganische Pigmente sowie lösliche Farbstoffe in den auf diesem Gebiet üblichen Mengen Anwendung finden. Nach dem Mischen der Härter- und Epoxidharzkomponenten im richtigen Mischungsverhältnis (siehe Tabelle V) werden die fertigen Druckfarben je nach Erfordernissen des jeweiligen Druckverfahrens auf die richtige Druckviskosität verdünnt.

Eine Auswahl der so hergestellten Druckfarben wurde mit einer handelsüblichen Druckmaschine von Rolle auf Rolle auf Polyäthylen und Aluminiumfolie gedruckt. Die Drucke waren sofort nach Abdunsten der Lösungsmittel physikalisch trocken, so daß keinerlei Kleben oder Abklatschen der Farben auf die Rückseite der aufgerollten Folie beobachtet wurde. Nach einer Standzeit von 7 Tagen bei Raumtemperatur wurden die Drucke einem ausführlichen, in der Druckfarbenindustrie üblichen Test unterzogen. Die Werte für die mechanischen, chemischen und thermischen Beständigkeitseigenschaften sind in den Tabellen VI und VII aufgeführt.

## Beschreibung der angewandten Testmethoden

### 1. Haftfestigkeit

Die Prüfung der Haftfestigkeit von Druckfilmen auf einem Druckträger erfolgt mit Tesafilm®-Streifen. Jeweils 10 aufgeklebte Streifen werden schnell oder langsam abgerissen.

### 2. Kratzfestigkeit

Die Druckfilme werden mehr oder weniger stark mit dem Fingernagel angekratzt.

### 3. Chemische Beständigkeit

Nach 24stündiger Lagerung in den jeweiligen Chemikalien werden die mechanischen Eigenschaften wie Haftung, Kratz- und Scheuerfestigkeit der Druckfilme direkt nach Herausnahme aus dem Testmedium sowie nach 10minütiger Erholzeit an Luft geprüft und entsprechend bewertet.

### 4. Siegelfestigkeit

Ca. 4 cm breite Streifen von Drucken auf Aluminiumfolie werden Druck gegen Druck gefaltet und unter einer Belastung von 1 kg/m² Druck und 1 sec Siegeldauer bei steigenden Temperaturen von 80 – 250°C in einem Brugger-Siegelautomaten gegeneinander gesiegelt. Nach dem Abkühlen wird entfaltet und beurteilt.

Bewertung der Testmethoden 1 – 3

1 sehr gut (Film einwandfrei)
2 gut (vereinzelte, punktförmige Beschädigungen)
3 befriedigend (sichtbare Beschädigungen)
4 ausreichend (großflächige Filmbeschädigungen)
5 ungenügend (Film zerstört)

Bewertung der Testmethode 4

0 absolut einwandfrei
1 Knistern, keine Filmbeschädigung
2 < 5% des Films beschädigt
3 < 10% des Films beschädigt
4 < 25% des Films beschädigt
5 > 25% des Films beschädigt

Wie die ermittelten Werte zeigen, wurden bei Verwendung der erfindungsgemäßen Kunstharzmischungen als Druckfarbenbindemittel sehr gute Chemikalienbeständigkeiten und vor allem deutlich höhere Wärmebeständigkeiten (Siegelfestigkeiten) erhalten als bei den bisher bekannten zweikomponentigen Druckfarben auf Epoxidharzbasis.

Tabelle 1

Epoxidharzkomponenten

| Nr. | Gruppe | Beschreibung der Epoxidharze | Epoxidwert |
|---|---|---|---|
| 1 | A | Handelsübliche Bisphenol A-Epoxidharze flüssig | 0,52 – 0,55 |
| 2 | A | Handelsübliche Bisphenol A-Epoxidharze halbfest | 0,39 – 0,44 |
| 3 | A | Handelsübliche Bisphenol F-Epoxidharze flüssig | 0,52 – 0,55 |
| 4 | A | Handelsübliche Novolak-Epoxidharze halbfest | 0,55 – 0,58 |
| 5 | A | Handelsüblicher Glycidyläther des Glycerins niedrigviskos | 0,65 – 0,70 |
| 6 | A | Handelsüblicher Glycidyläther des Neopentylglykols niedrigviskos | 0,64 – 0,70 |
| 7 | A | Handelsüblicher Glycidyläther des Pentaerythrits | 0,59 – 0,64 |
| 8 | A | – | |

Tabelle 2

Härterkomponenten

| Nr | Gruppe | Beschreibung des Härters | Aminwasserstoff Äquivalentgew. |
|---|---|---|---|
| 1 | C a) | HH auf Basis Trimethylhexamethylendiamin mit Alkylphenol formuliert | 140 |
| 2 | C a) | HH auf Basis eines N-cyanäthylierten Diamins | 70 |
| 3 | C b) | HH auf Basis von Dipropylentriamin | 28 |
| 4 | C b) | H auf Basis Tetraäthylenpentamin mit Alkylphenol formuliert | 30 |
| 5 | C b) | H auf Basis 3-(2-Aminoäthyl)-Aminopropylamin mit Alkylphenol formuliert | 26 |
| 6 | C b) | HH auf Basis N,N'-Bis(3-Aminopropyl)-Äthylendiamin | 29 |
| 7 | C c) | HH auf Basis Butandiolätherdiamin | 50 |
| 8 | C d) | H auf Basis Aminopropylcyclohexylamin mit Benzylalkohol formuliert | 57 |
| 9 | C d) | HH auf Basis Diaminodimethyldicyclohexylmethan | 65 |
| 10 | C e) | Handelsüblicher Polyaminoamidhärter auf Basis dimerer Fettsäure und Polyamin | 166 |
| 11 | C e) | Handelsüblicher, imidazolinhaltiger Polyaminoamidhärter auf Basis dimerer Fettsäure und Polyamin | 95 |
| 12 | C e) | Handelsüblicher Polyaminoamidhärter auf Basis monomerer Fettsäure und Polyamin | 93 |
| 13 | C f) | HH in Form einer Mannichbase auf Basis Xylylendiamin | 76 |
| 14 | C f) | HH in Form einer Mannichbase auf Basis Hexamethylendiamin | 74 |

Fortsetzung

| Nr. | Gruppe | Beschreibung des Härters | Aminwasserstoff Äquivalentgew. |
|---|---|---|---|
| 15 | C g) | Härteraddukt auf Basis 2 Mol Äthylendiamin und 1 Mol Bisphenol A-Diglycidyläther | 83 |
| 16 | C g) | Härteraddukt auf Basis 2 Mol Dipropylentriamin und 1 Mol Bisphenol A-Diglycidyläther | 80 |
| 17 | C g) | Härteraddukt auf Basis 2 Mol Dipropylentriamin und 1 Mol Neopentylglykoldiglycidyläther | 71 |
| 18 | C g) | HH für Härteraddukt auf Basis von Isophorondiamin und Bisphenol A-Diglycidyläther, mit Benzylalkohol und Alkylphenol formuliert | 111 |

HH = Handelsüblicher Härter

Tabelle 3

Epoxidharzformulierungen

| Nr. | Harz-Nr. | Gew.-Teile | Cellulosederivat | Gew.-Teile | Streckmittel | Gew.-Teile | Lösungsmittel | Gew.-Teile |
|---|---|---|---|---|---|---|---|---|
| 1 | 1 | 15,0 | Celluloseaceto-propionat | 20,5 | — | — | Äthanol<br>Äthylacetat | 35,0<br>29,5 |
| 2 | 1 | 15,0 | desgl. | 17,0 | — | — | Äthanol<br>Äthylacetat | 34,0<br>34,0 |
| 3 | 6 | 10,0 | desgl. | 16,9 | — | — | Äthanol<br>Äthylacetat<br>Aceton | 50,0<br>15,0<br>8,1 |
| 4 | 4 | 15,0 | desgl. | 12,8 | — | — | Äthanol<br>Äthylacetat<br>Aceton | 15,0<br>30,0<br>27,2 |
| 5 | 4 | 15,0 | desgl. | 10,7 | — | — | Äthanol<br>Äthylacetat<br>Aceton | 20,0<br>30,0<br>24,3 |
| 6 | 4 | 20,0 | desgl. | 11,7 | — | — | Äthanol<br>Äthylacetat<br>Aceton | 20,0<br>26,3<br>22,0 |
| 7 | 4 | 20,0 | desgl. | 11,5 | — | — | Äthanol<br>Äthylacetat<br>Aceton | 15,0<br>30,0<br>23,5 |
| 8 | 4 | 20,0 | desgl. | 11,7 | — | — | Äthanol<br>Äthylacetat<br>Aceton | 20,0<br>22,0<br>26,3 |
| 9 | 1 | 20,0 | desgl. | 17,1 | — | — | Äthanol<br>Äthylacetat | 32,0<br>30,9 |
| 10 | 4 | 15,0 | desgl. | 7,1 | — | — | Äthylacetat<br>Aceton | 38,9<br>39,0 |

Fortsetzung

| Nr. | Harz-Nr. | Gew.-Teile | Cellulosederivat | Gew.-Teile | Streckmittel | Gew.-Teile | Lösungsmittel | Gew.-Teile |
|---|---|---|---|---|---|---|---|---|
| 11 | 3 | 15,0 | desgl. | 13,2 | — | — | Äthanol<br>Äthylacetat | 37,0<br>23,4 |
| 12 | 4 | 7,0 | desgl. | 21,4 | — | — | Äthanol<br>Äthylacetat<br>Aceton | 15,0<br>26,6<br>30,0 |
| 13 | 4 | 15,0 | desgl. | 4,7 | — | — | Äthanol<br>Äthylacetat<br>Aceton | 20,0<br>30,0<br>30,3 |
| 14 | 4 | 15,0 | desgl. | 11,0 | — | — | Äthanol<br>Äthylacetat<br>Aceton | 20,0<br>30,0<br>24,0 |
| 15 | 1 | 15,0 | desgl. | 10,7 | — | — | Äthanol<br>Äthylacetat | 37,3<br>37,0 |
| 16 | 4 | 15,0 | desgl. | 10,8 | — | — | Äthanol<br>Äthylacetat<br>Aceton | 10,0<br>27,2<br>37,0 |
| 17 | 7 | 15,0 | desgl. | 21,0 | — | — | Äthanol<br>Äthylacetat | 32,0<br>32,0 |
| 18 | 2 | 20,0 | Celluloseacetobutyrat | 17,9 | — | — | Äthanol<br>Äthylacetat<br>Aceton | 20,0<br>20,0<br>22,1 |
| 19 | 4 | 15,0 | desgl. | 12,2 | — | — | Äthylacetat<br>Aceton | 38,0<br>34,8 |
| 20 | 1 | 10,0 | Celluloseacetat | 14,1 | — | — | Äthylacetat<br>Aceton | 38,0<br>37,9 |
| 21 | 4 | 15,0 | Äthylcellulose | 7,7 | Kolophonium[1]) | 5,0 | Äthanol<br>Äthylacetat<br>Aceton | 25,0<br>22,3<br>25,0 |
| 22 | 2 | 15,0 | desgl. | 19,8 | — | — | Äthanol<br>Äthylacetat | 35,0<br>30,2 |
| 23 | 5 | 15,0 | desgl. | 16,5 | — | — | Äthanol<br>Äthylacetat | 35,0<br>33,5 |
| 24 | 4 | 21,0 | Celluloseacetopropionat | 14,0 | Ketonharz[2]) | 5,0 | Äthanol<br>Äthylacetat<br>Methyläthylketon | 10<br>25<br>25 |
| 25 | 4 | 21,0 | desgl. | 14,0 | desgl. | 5,0 | Äthylacetat<br>Aceton | 50<br>10 |
| 26 | 4 | 21,0 | desgl. | 14,0 | desgl. | 5,0 | Äthylacetat<br>Aceton | 50<br>10 |
| 27 | 4<br>1 | 10,5<br>10,5 | desgl. | 14,0 | desgl. | 5,0 | Äthylacetat<br>Aceton | 50<br>10 |

Fortsetzung

| Nr. | Harz-Teile | Gew.-Teile | Cellulosederivat | Gew.-Teile | Streck-mittel | Gew.-Teile | Lösungsmittel | Gew.-Teile |
|---|---|---|---|---|---|---|---|---|
| 28 | 4<br>2 | 10,5<br>10,5 | desgl. | 14,0 | desgl. | 5,0 | Äthylacetat<br>Methyläthylketon | 50<br>10 |
| 29 | 3<br>6 | 7,5<br>7,5 | desgl. | 14,5 | — | — | Äthanol<br>Äthylacetat | 36,7<br>27,1 |
| 30 | 4<br>1 | 10,5<br>10,5 | desgl. | 14,0 | Keton-harz[2]) | 5,0 | Äthylacetat<br>Aceton | 50<br>10 |
| 31 | 4 | 21 | desgl. | 15,0 | — | — | Äthylglykol<br>Äthylglykolacetat | 32,0<br>32,0 |
| 32 | 4 | 21 | desgl.<br>Celluloseaceto-butyrat | 7,5<br>7,5 | — | — | Äthylacetat<br>Aceton | 52,0<br>12,0 |

[1]) Polyharz 60 (Fa. Lackharzwerk Robert Kraemer, Bremen)
[2]) Setalin C 361 (Fa. Kunstharzfabrik Synthese RV, Holland)

Tabelle 4

Härterformulierungen

| Nr. | Härter-Nr. (Tab. 2) | Gew.-Teile | Lösungsmittel | Gew.-Teile |
|---|---|---|---|---|
| 1 | 12 | 7,5 | Äthanol<br>Aceton | 10,5<br>7,0 |
| 2 | 13 | 6,2 | Äthanol<br>Aceton | 10,8<br>8,0 |
| 3 | 10 | 11,1 | Äthanol<br>Äthylacetat<br>Aceton | 5,0<br>5,0<br>3,9 |
| 4 | 7 | 4,2 | Äthanol<br>Äthylacetat<br>Aceton | 8,0<br>4,8<br>8,0 |
| 5 | 2 | 6,3 | Äthanol<br>Aceton | 13,0<br>5,7 |
| 6 | 4 | 3,4 | Äthanol | 21,6 |
| 7 | 5 | 2,9 | Äthanol | 22,1 |
| 8 | 6 | 3,3 | Äthanol | 21,7 |
| 9 | 8 | 5,6 | Äthanol<br>Aceton | 15,0<br>4,4 |
| 10 | 14 | 6,2 | Äthanol<br>Methyläthylketon | 15,0<br>3,8 |
| 11 | 1 | 11,4 | Äthanol<br>Aceton | 7,0<br>6,6 |

Fortsetzung

| Nr. | Härter-Nr. (Tab. 2) | Gew.-Teile | Lösungsmittel | Gew.-Teile |
|---|---|---|---|---|
| 12 | 13<br>18 | 1,5<br>2,2 | Äthanol | 21,3 |
| 13 | 12 | 8,3 | Äthanol<br>Aceton | 12,0<br>4,7 |
| 14 | 15 | 7,0 | Äthanol<br>Äthylacetat<br>Methyläthylketon | 6,0<br>6,0<br>6,0 |
| 15 | 16 | 6,4 | Äthanol<br>Äthylacetat<br>Aceton | 6,6<br>6,0<br>6,0 |
| 16 | 17 | 6,5 | Äthanol<br>Äthylacetat<br>Aceton | 7,0<br>6,0<br>5,5 |
| 17 | 9 | 6,0 | Äthanol<br>Aceton | 11,0<br>8,0 |
| 18 | 3 | 2,4 | Äthanol<br>Äthylacetat<br>Aceton | 7,0<br>7,0<br>8,6 |
| 19 | 18 | 9,3 | Äthanol<br>Methyläthylketon | 8,0<br>7,7 |
| 20 | 1 | 7,6 | Äthanol<br>Aceton | 7,4<br>10,0 |
| 21 | 11 | 8,0 | Äthanol<br>Aceton | 9,0<br>8,0 |
| 22 | 13 | 4,8 | Äthanol | 20,2 |
| 23 | 11 | 9,7 | Äthanol<br>Aceton | 8,3<br>7,0 |
| 24 | 3<br>13 | 1,7<br>4,5 | Äthanol | 18,8 |
| 25 | 18<br>13 | 6,5<br>4,5 | Äthanol<br>Aceton | 10,0<br>4,0 |
| 26 | 18<br>3 | 6,5<br>1,7 | Äthanol | 16,8 |
| 27 | 3 | 3,3 | Isopropanol | 21,7 |
| 28 | 13 | 7,9 | Äthanol | 17,1 |
| 29 | 13 | 6,7 | Äthanol | 18,3 |
| 30 | 13<br>18 | 4,5<br>6,3 | Isopropanol<br>Aceton | 7,2<br>7,0 |
| 31 | 13 | 9,0 | Äthylglykol | 16,0 |
| 32 | 13 | 9,0 | Äthanol | 16,0 |

Tabelle 5

Mischungsbeispiele

| Nr. | Harzform. Nr. (Tabelle 3) | Gew.-Teile | Härterform. Nr. (Tabelle 4) | Gew.-Teile | Verhältnis an reinen Komponenten Harz : Härter | Verhältnis A + C : B |
|---|---|---|---|---|---|---|
| 1 | 1 | 100 | 1 | 25 | 15 : 7,5 | 1,10 : 1 |
| 2 | 2 | 100 | 2 | 25 | 15 : 6,2 | 1,25 : 1 |
| 3 | 3 | 100 | 3 | 25 | 10 : 11,1 | 1,25 : 1 |
| 4 | 4 | 100 | 4 | 25 | 15 : 4,2 | 1,50 : 1 |
| 5 | 5 | 100 | 5 | 25 | 15 : 6,3 | 2,00 : 1 |
| 6 | 6 | 100 | 6 | 25 | 20 : 3,4 | 2,00 : 1 |
| 7 | 7 | 100 | 7 | 25 | 20 : 2,9 | 2,00 : 1 |
| 8 | 8 | 100 | 8 | 25 | 20 : 3,3 | 2,00 : 1 |
| 9 | 9 | 100 | 9 | 25 | 20 : 5,6 | 1,50 : 1 |
| 10 | 10 | 100 | 10 | 25 | 15 : 6,2 | 3,00 : 1 |
| 11 | 11 | 100 | 11 | 25 | 15 : 11,4 | 2,00 : 1 |
| 12 | 12 | 100 | 12 | 25 | 7 : 3,7 | 0,50 : 1 |
| 13 | 13 | 100 | 13 | 25 | 15 : 8,3 | 5,00 : 1 |
| 14 | 14 | 100 | 14 | 25 | 15 : 7,0 | 2,00 : 1 |
| 15 | 15 | 100 | 15 | 25 | 15 : 6,4 | 2,00 : 1 |
| 16 | 16 | 100 | 16 | 25 | 15 : 6,8 | 2,00 : 1 |
| 17 | 17 | 100 | 17 | 25 | 15 : 6,0 | 1,00 : 1 |
| 18 | 18 | 100 | 18 | 25 | 20 : 2,4 | 1,25 : 1 |
| 19 | 19 | 100 | 19 | 25 | 15 : 9,3 | 2,00 : 1 |
| 20 | 20 | 100 | 20 | 25 | 10 : 7,6 | 1,25 : 1 |
| 21 | 21 | 100 | 21 | 25 | 15 : 8,0 | 3,00 : 1 |
| 22 | 22 | 100 | 22 | 25 | 15 : 4,8 | 1,00 : 1 |
| 23 | 23 | 100 | 23 | 25 | 15 : 9,7 | 1,50 : 1 |
| 24 | 24 | 100 | 24 | 25 | 21 : 6,2 | 1,90 : 1 |
| 25 | 25 | 100 | 25 | 25 | 21 : 11,0 | 2,30 : 1 |
| 26 | 26 | 100 | 26 | 25 | 21 : 8,2 | 2,10 : 1 |
| 27 | 27 | 100 | 27 | 25 | 21 : 3,3 | 1,70 : 1 |
| 28 | 28 | 100 | 28 | 25 | 21 : 7,9 | 2,10 : 1 |

Fortsetzung

| Nr. | Harzform. Nr. (Tabelle 3) | Gew.-Teile | Härterform. Nr. (Tabelle 4) | Gew.-Teile | Verhältnis an reinen Komponenten Harz : Härter | Verhältnis A + C : B |
|---|---|---|---|---|---|---|
| 29 | 29 | 100 | 29 | 25 | 15 : 6,7 | 1,50 : 1 |
| 30 | 30 | 100 | 30 | 25 | 21 : 10,8 | 2,30 : 1 |
| 31 | 31 | 100 | 31 | 25 | 21 : 9 | 2,00 : 1 |
| 32 | 32 | 100 | 32 | 25 | 21 : 9 | 2,00 : 1 |

Tabelle 6

Chemikalienbeständigkeiten

| Nr. | Mischg.*) Nr. (Tab. 5) | ohne Belastung | Wasser | Essigsäure 10%ig | Milchsäure 10%ig | Zitronensäure 10%ig | Natronlauge 1%ig | Rei-Lösung 1%ig | Persil-Lösung 1%ig | Kernseifen-Lösung 1%ig | Speise-Öl | Butter |
|---|---|---|---|---|---|---|---|---|---|---|---|---|
| 1 | 1 | 1,6 | 1,7 | 1,8 | 1,7 | 1,7 | 1,7 | 1,8 | 1,7 | 1,6 | 1,5 | 1,5 |
| 2 | 7 | 1,5 | 1,8 | 1,9 | 2,1 | 1,9 | 1,7 | 1,7 | 1,7 | 1,5 | 1,5 | 1,5 |
| 3 | 12 | 1,4 | 1,6 | 1,8 | 1,7 | 1,7 | 1,8 | 1,8 | 1,8 | 1,6 | 1,4 | 1,5 |
| 4 | 16 | 1,5 | 1,7 | 1,8 | 1,9 | 2,0 | 1,9 | 1,7 | 1,8 | 1,7 | 1,6 | 1,6 |
| 5 | 17 | 1,8 | 1,9 | 2,1 | 2,0 | 1,9 | 1,9 | 1,9 | 2,1 | 2,0 | 1,7 | 1,7 |
| 6 | 18 | 1,6 | 1,7 | 1,7 | 1,7 | 1,6 | 1,7 | 1,7 | 1,7 | 1,7 | 1,5 | 1,5 |
| 7 | 21 | 1,5 | 1,6 | 1,8 | 1,7 | 1,8 | 1,7 | 1,7 | 1,6 | 1,6 | 1,5 | 1,6 |
| 8 | 23 | 1,6 | 1,7 | 1,9 | 1,8 | 1,7 | 1,9 | 1,8 | 1,7 | 1,7 | 1,6 | 1,6 |
| 9 | 27 | 1,7 | 1,8 | 1,7 | 1,9 | 1,9 | 1,8 | 1,7 | 1,7 | 1,7 | 1,7 | 1,7 |
| 10 | 29 | 1,5 | 1,8 | 1,7 | 1,6 | 1,5 | 1,7 | 1,6 | 1,7 | 1,6 | 1,5 | 1,5 |

*) Mischungen enthalten 50 Gew.-% $TiO_2$, bezogen auf Festkörperanteil Gesamtbindemittel

Tabelle 7

Siegelfestigkeiten

| Siegeltemperaturen | Mischung*) Nr. (Tabelle 5) 1 | 5 | 9 | 10 | 12 | 13 | 14 | 15 | 16 | 17 | 18 | 19 |
|---|---|---|---|---|---|---|---|---|---|---|---|---|
| 60 °C | 0 | 0 | 0 | 0 | 0 | 0 | 0 | 0 | 0 | 0 | 0 | 0 |
| 80 °C | 0 | 0 | 0 | 0 | 0 | 0 | 0 | 0 | 0 | 0 | 0 | 0 |
| 90 °C | 0 | 0 | 0 | 0 | 0 | 0 | 0 | 0 | 0 | 0 | 0 | 0 |
| 100 °C | 0 | 0 | 0 | 0 | 0 | 0 | 0 | 0 | 0 | 0 | 0 | 0 |

Fortsetzung

| Siegel-temperaturen | Mischung*) Nr. (Tabelle 5) 1 | 5 | 9 | 10 | 12 | 13 | 14 | 15 | 16 | 17 | 18 | 19 |
|---|---|---|---|---|---|---|---|---|---|---|---|---|
| 110° C | 0 | 0 | 0 | 0 | 0 | 0 | 0 | 0 | 0 | 0 | 0 | 0 |
| 120° C | 0 | 0 | 0 | 0 | 0 | 0 | 1 | 0 | 0 | 0 | 0 | 0 |
| 130° C | 1 | 0 | 0 | 1 | 0 | 0 | 1–2 | 0 | 1 | 0 | 1–2 | 0 |
| 140° C | 2 | 0 | 1 | 0 | 1 | 1 | 2 | 0 | 1 | 1 | 2 | 2 |
| 150° C | 1 | 1 | 1 | 0 | 0 | 1 | 1–2 | 1 | 0 | 0 | 1–2 | 2 |
| 160° C | 1 | 1 | 2 | 1 | 1 | 0 | 2 | 1 | 1 | 1 | 2 | 2 |
| 170° C | 2 | 1–2 | 2 | 1 | 1 | 0 | 2 | 1 | 0 | 1–2 | 2 | 1–2 |
| 180° C | 2 | 1 | 2 | 0 | 0 | 0 | 2 | 2 | 1 | 1–2 | 2 | 2 |
| 190° C | 2 | 2 | 2 | 1 | 1 | 0 | 2 | 1–2 | 1 | 2 | 2 | 1–2 |
| 200° C | 2 | 1–2 | 2 | 1–2 | 1 | 1 | 2 | 2 | 1–2 | 2 | 2 | 2 |
| 225° C | 2–3 | 2 | 2 | 1–2 | 1–2 | 1–2 | 2–3 | 2–3 | 1–2 | 2 | 2 | 2 |
| 250° C | 2 | 2 | 2–3 | 2 | 1–2 | 1 | 2 | 2 | 1–2 | 2 | 2–3 | 2–3 |

*) Mischungen enthalten 50 Gew.-% $TiO_2$, bezogen auf Festkörperanteil Gesamtbindemittel

Tabelle 7 (Fortsetzung)

Siegelfestigkeiten

| Siegel-temperaturen | Mischung*) Nr. (Tabelle 5) 20 | 21 | 22 | 24 | 25 | 26 | 28 | 29 | Vergleichs-beispiele A | B |
|---|---|---|---|---|---|---|---|---|---|---|
| 60° C | 0 | 0 | 0 | 0 | 0 | 0 | 0 | 0 | 0 | 0 |
| 80° C | 0 | 0 | 0 | 0 | 0 | 0 | 0 | 0 | 1 | 0 |
| 90° C | 0 | 0 | 0 | 0 | 0 | 0 | 0 | 0 | 1–2 | 1 |
| 100° C | 0 | 0 | 0 | 0 | 0 | 0 | 0 | 0 | 1–2 | 1 |
| 110° C | 0 | 0 | 0 | 0 | 0 | 0 | 0 | 0 | 1–2 | 1–2 |
| 120° C | 0 | 1 | 1 | 1 | 1 | 0 | 0 | 1 | 2 | 1–2 |
| 130° C | 0 | 1 | 0 | 0 | 0 | 1 | 0 | 1 | 2 | 2 |
| 140° C | 0 | 1 | 1–2 | 0 | 0 | 0 | 0 | 0 | 2–3 | 1–2 |
| 150° C | 1 | 1–2 | 1 | 1 | 0 | 0 | 0 | 1 | 2–3 | 2–3 |
| 160° C | 1 | 1–2 | 1–2 | 1 | 1 | 0 | 1 | 1 | 3–4 | 2–3 |
| 170° C | 0 | 1 | 1 | 0 | 1–2 | 1 | 1 | 1 | 2–3 | 3–4 |
| 180° C | 1 | 1–2 | 1–2 | 1 | 1 | 1 | 0 | 1–2 | 2–3 | 3–4 |

Fortsetzung

| Siegel-temperaturen | Mischung*) Nr. (Tabelle 5) 20 | 21 | 22 | 24 | 25 | 26 | 28 | 29 | Vergleichs-beispiele A | B |
|---|---|---|---|---|---|---|---|---|---|---|
| 190 C | 1–2 | 2 | 2 | 1 | 1 | 0 | 1 | 1 | 3–4 | 2–3 |
| 200 C | 1 | 2 | 2–3 | 1 | 1 | 0 | 0 | 2 | 3–4 | 2–3 |
| 225 C | 1–2 | 2 | 2 | 1–2 | 1 | 1 | 1–2 | 1–2 | 3–4 | 3–4 |
| 250 C | 2 | 2–3 | 2 | 1–2 | 1 | 1 | 1 | 1–2 | 4 | 3–4 |

*) Mischungen enthalten 50 Gew.-% $TiO_2$, bezogen auf Festkörperanteil Gesamtbindemittel
A) Druck nach DE-AS 1 494 525
B) Druck nach DE-AS 2 733 597

## Patentansprüche

1. Verwendung von härtbaren Kunstharzmischungen, die nach Abdunsten des Lösungsmittels physikalisch trockene und klare Filme ergeben und die bei Raumtemperatur bzw. wenig erhöhter Temperatur aushärten, als Bindemittel für Druckfarben für den Tief-, Flexo- und Siebdruck, dadurch gekennzeichnet, daß die Kunstharzmischungen, bestehen aus

A) Glycidylverbindungen mit mehr als 1 Epoxidgruppe pro Molekül und Epoxidwerten von 0,35 bis 0,70 und
B) Celluloseäthern und/oder Celluloseestern in Mengen von 0,5 : 1 bis 5 : 1, bezogen auf das Verhältnis Epoxidharz/Härtermischungen (A + C) : Cellulosederivaten, und
C) einer oder mehreren Aminverbindungen mit mindestens zwei reaktiven Aminwasserstoffatomen aus der Gruppe der
   a) aliphatischen Polyamine der allgemeinen Formel

$$R'-\left[HN-(CHR)_x-NH\right]-R' \qquad (I)$$

   in welcher R ein Alkylrest mit 1–4 Kohlenstoffatomen oder H, R', H oder der Rest $-CH_2-CH_2-CN$, und x ein Wert von 2–6 sein kann,
   b) Polyalkylenpolyamine der allgemeinen Formel

$$H_2N-\left[(CHR)_xNH\right]_y-H \qquad (II)$$

   in welcher R ein Alkylrest mit 1–4 Kohlenstoffatomen oder H sein und x die Werte 2–6 und y die Werte 2–4 haben kann,
   c) Polyätheramine der allgemeinen Formel

$$H_2N-(CH_2)_n-O-(R^1-O)_z(CH_2)_n-NH_2 \qquad (III)$$

   in welcher n ein Wert von 3–5, z ein Wert von 0, 1, 2 oder 3 und $R^1$ ein gegebenenfalls durch einen Alkylrest mit 1–4 Kohlenstoffatomen substituierter Alkylenrest mit 1–12 Kohlenstoffatomen sein kann,
   d) cycloaliphatischen Polyamine der allgemeinen Formel

$$H_2N-R^2-NH_2 \qquad (IV)$$

   in welcher $R^2$ der Rest

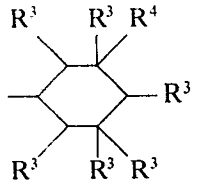 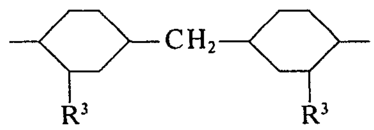 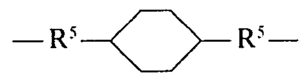

sein kann, mit $R^3=H$ oder $CH_3-$, $R^4=-CH_2-$ und $R^5$ ein Alkylenrest, der gleich oder verschieden und 0,1 oder 2mal vorhanden sein kann und 1—3 Kohlenstoffatome haben kann,

e) Aminoamidverbindungen und/oder imidazolingruppenhaltigen Aminoamidverbindungen mit Aminwasserstoffäquivalentgewichten von 90—175,
f) Phenol-Formaldehyd-Amin-Kondensationsprodukte (Mannichbasen) mit mindestens zwei reaktiven Aminwasserstoffatomen
g) Addukte der Aminverbindungen gemäß Ca)—Cf), hergestellt durch Umsetzung von überschüssigem Amin mit Glycidylverbindungen gemäß A)

D) aromatenfreien Lösungsmitteln und gegebenenfalls
E) Pigmenten, Farbstoffen, Beschleunigern, reaktiven Verdünnern, Streck- und Verlaufsmitteln.

2. Verwendung von härtbaren Kunstharzmischungen gemäß Anspruch 1, dadurch gekennzeichnet, daß als Glycidylverbindungen gemäß A) Glycidyläther auf Basis von Novolaken mit Epoxidwerten von 0,50—0,60 verwendet werden.

3. Verwendung von härtbaren Kunstharzmischungen gemäß Anspruch 1, dadurch gekennzeichnet, daß als Aminverbindungen gemäß C) monocyanäthyliertes Trimethylhexamethylendiamnin, Dipropylentriamin, 1,12-Diamino-4,1-dioxa-dodecan, Isophorondiamin, Aminoamid auf Basis einer $C_{18}$-Monocarbonsäure und Tetraäthylenpentamin, Aminoamid auf Basis dimerisierter Fettsäure und Triäthylentetramin oder Mannichbasen auf Basis von Phenol, Formaldehyd und Trimethylhexamethylendiamin oder p-tert. Butylphenol, Formaldehyd und Trimethylhexamethylendiamin und Xylylendiamin verwendet werden.

4. Verwendung von härtbaren Kunstharzmischungen gemäß Anspruch 1, dadurch gekennzeichnet, daß als Harz-Härter-Mischungen Mischungen aus

A) Novolakglycidyläther mit einem Epoxidwert von 0,55—0,57 und
B) Celluloseacetopropionat in Mengen von 1 : 1 bis 1 : 3, bezogen auf Epoxidharz/Härtermenge und
C) einem Addukt aus Neopentylglykolglycidyläther und Dipropylentriamin mit einem Aminwasserstoffäquivalentgewicht von 71

verwendet werden.

5. Verwendung von Harz-Härter-Mischungen gemäß Anspruch 4, dadurch gekennzeichnet, daß anstelle des Härtungsmittels gemäß C) eine Mischung aus Dipropylentriamin (Aminwasserstoffäquivalentgewicht 28) und die Mannichbase aus p-tert.-Butylphenol, Formaldehyd und Trimethylhexamethylendiamin und Xylylendiamin verwendet wird.

6. Verwendung von Harz-Härter-Mischungen gemäß Anspruch 4, dadurch gekennzeichnet, daß als Härtungsmittel eine Mischung eines Adduktes aus Isophorondiamin und Bisphenol-A-Diglycidyläther (Epoxidwert 0,52) mit Benzylalkohol und Nonylphenol als Beschleuniger mit einem Aminwasserstoffäquivalentgewicht der Mischung von 111 und die Mannichbase aus p-tert.Butylphenol, Formaldehyd und Trimethylhexamethylendiamin und Xylylendiamin verwendet wird.

7. Verwendung von Harz-Härter-Mischungen gemäß Anspruch 4, dadurch gekennzeichnet, daß eine Mischung eines Adduktes aus Isophorondiamin und Bisphenol-A-Diglycidyläther (Epoxidwert 0,52) mit Benzylalkohol und Nonylphenol als Beschleuniger und einem Aminwasserstoffäquivalentgewicht der Mischung von 111 und Dipropylentriamin verwendet wird.

8. Verwendung von Harz-Härter-Mischungen gemäß den Ansprüchen 1 bis 7, dadurch gekennzeichnet, daß als Cellulosekomponente gemäß B) Celluloseacetopropionat verwendet wird.

9. Verfahren zum Bedrucken von Oberflächen, dadurch gekennzeichnet, daß als Bindemittel Kunstharzmischungen gemäß den Ansprüchen 1—8 verwendet werden.

10. Mittel für das Verfahren zum Bedrucken von Oberflächen, dadurch gekennzeichnet, daß als Bindemittel Kunstharzmischungen gemäß den Ansprüchen 1—8 verwendet werden.

**Claims**

1. Use of hardenable synthetic resin mixtures, which after evaporation of the solvent result in physically dry and clear films and harden at room temperature or slightly increased temperature, as binders for printing inks for gravure, flexographic and screen printing, characterised in that the synthetic resin mixtures comprise:

A) glycidyl compounds having more than one epoxide group per molecule and epoxide values of 0.35 to 0.70, and

B) cellulose ethers and/or cellulose esters in volumes corresponding to a ratio 0.5 : 1 to 5 : 1, being the ratio of epoxide resin/hardener mixtures (A + C): cellulose derivatives, and

C) one or more amine compounds with at least two reactive amine hydrogen atoms selected from the group of

a) aliphatic polyamines of the general formula:

$$R'-\left[HN-(CHR)_x-NH\right]-R' \qquad (I)$$

where R is an alkyl residue with 1–4 carbon atoms or H, R' is H or the residue $-CH_2-CH_2-CN$, and x has a value of 2–6,

b) polyalkylenepolyamines of the general formula:

$$H_2N-\left[(CHR)_xNH\right]_y-H \qquad (II)$$

where R is an alkyl residue with 1–4 carbon atoms or H, and x has a value of 2–6 and y a value of 2–4,

c) polyetheramines of the general formula:

$$H_2N-(CH_2)_n-O-(R^1-O)_z(CH_2)_n-NH_2 \qquad (III)$$

where n has a value of 3–5, z a value of 0, 1, 2 or 3, and $R^1$ is an alkylene residue with 1–12 carbon atoms, optionally substituted by an alkyl residue with 1–4 carbon atoms,

d) cycloaliphatic polyamines of the general formula:

$$H_2N-R^2-NH_2 \qquad (IV)$$

where $R^2$ is the residue:

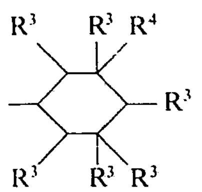

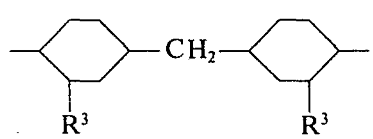

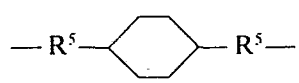

where $R^3$ = H or $CH_3-$, $R^4$ = $-CH_2-$ and $R^5$ = an alkylene residue which may be the same or different and be present 0, 1 or 2 times and may have 1–3 carbon atoms,

e) aminoamide compounds and/or aminoamide compounds containing imidazoline groups with amine-hydrogen equivalent weights of 90–175,

f) phenol-formaldehyde-amine condensation products (Mannich bases) with at least two reactive amino-hydrogen atoms,

g) adducts of the amine compounds in accordance with Ca)–Cf) produced by a reaction of excess amine with glycidyl compounds in accordance with (A).

D) solvents free of aromatic compounds and, optionally

E) pigments, dyes, accelerators, reactive thinners, extenders and levelling agents.

2. Use of the hardenable synthetic resin mixtures in accordance with claim 1, characterised in that the glycidyl compounds used in accordance with A) are glycidyl ethers based on novolaks with epoxide values of 0.50–0.60.

3. Use of hardenable synthetic resin mixtures according to claim 1, characterised in that the amino compounds used in accordance with C) are monocyanoethylated trimethylhexamethylenediamine, dipropylenetriamine, 1,12-diamino-4,1-dioxa-dodecane, isophorone-diamine, aminoamine based on a $C_{18}$-monocarboxylic acid and tetraethylene-pentamine, aminoamide based on dimerized fatty acid and triethylenetetramine or Mannich bases based on phenol, formaldehyde and trimethylhexamethylenediamine or p-tert-butylphenol, formaldehyde and trimethylhexamethylenediamine and xylylenediamine.

4. Use of hardenable synthetic resin mixtures in accordance with claim 1, characterised in that the resin hardener mixtures used are mixtures of

A) novolakglycidylether with an epoxide value of 0.55–0.57 and

B) cellulose acetopropionate in volumes of 1 : 1 to 1 : 3 relative to the epoxide/hardener volume and

C) an adduct consisting of neopentylglycolglycidylether and dipropylenetriamine with an amine-hydrogen equivalent weight of 71.

5. Use of resin-hardener mixtures in accordance with claim 4, characterised in that the hardener in accordance with C) is a mixture consisting of dipropylenetriamine (amine-hydrogen equivalent weight 28) and the Mannich base of p-tert-butylphenol, formaldehyde and trimethylhexamethylenediamine and xylylenediamine.

6. Use of resin-hardener mixtures in accordance with claim 4, characterised in that the hardener used is a mixture of an adduct of isohoronediamine and bisphenol-A-diglycidylether (epoxide value 0.52) with benzylalcohol and nonylphenol as accelerator with an amine-hydrogen equivalent weight of the mixture of 111 and the Mannich base of p-tert-butylphenol, formaldehyde and trimethylhexamethylenediamine and xylylenediamine.

7. Use of resin-hardener mixtures in accordance with claim 4, characterised in that a mixture of an adduct of isophoronediamine and bisphenol-A-diglycidylether (epoxide value 0.52) with benzyl alcohol and nonylphenol as accelerator and an amine-hydrogen equivalent weight of the mixture of 111 and dipropylenetriamine is used.

8. Use or resin-hardener mixtures in accordance with the claims 1 to 7, characterised in that the cellulose component used in accordance with B) is cellulose acetoproprionate.

9. Method for printing surfaces, characterised in that the binders used are synthetic resin mixtures in accordance with claims 1–8.

10. Product for use in printing surfaces, characterised in that the binders used are synthetic resin mixtures in accordance with claims 1–8.

**Revendications**

1. Utilisation de mélanges de résines durcissables qui, après évaporation du solvant, donnent des films physiquement secs et limpides et qui durcissent à la température ambiante ou à température peu élevée, comme liant pour des encres pour l'impression en héliogravure ou impression profonde, impression flexographique et sérigraphie, utilisation caractérisée en ce que les mélanges de matières synthétiques ou plastiques constistent en:

A) des composés diglycidyliques comportant plus d'un groupe époxide par molécule et ayant des indices d'époxyde de 0,35 à 0,70,
B) des éthers de cellulose et/ou des esters de cellulose, en des quantités de 0,5 : 1 à 5 : 1, en se fondant sur le rapport mélanges résine époxyde/durcisseur (A + C) : dérivés de la cellulose, et
C) une ou plusieurs amines comportant au moins deux atomes d'hydrogène réactifs d'amines, choisis parmi:
   a) des polyamines aliphatiques de formule générale:

$$R'-\left[HN-(CHR)_x-NH\right]-R' \qquad (I)$$

   (dans laquelle R peut représenter un radical alkyle ayant 1 à 4 atomes de carbone ou H; R' peut représenter H ou le radical $-CH_2-CH_2-CN$; et x peut valoir 2 à 6),
   b) des polyalkylènepolyamines de formule générale:

$$H_2N-\left[(CHR)_xNH\right]_y-H \qquad (II)$$

   (dans laquelle R peut représenter un radical alkyle ayant 1 à 4 atomes de carbone ou H, et x peut valoir 2 à 6 et y 2 à 4),
   c) des polyétheramines de formule générale:

$$H_2N-(CH_2)_n-O-(R^1-O)_z(CH_2)_n-NH_2 \qquad (III)$$

   (dans laquelle n peut valoir 3 à 5, z peut valoir 0, 1, 2 ou 3; et $R^1$ peut représenter un radical alkylène comportant 1 à 12 atomes de carbone et qui est éventuellement substitué par un radical alkyle ayant 1 à 4 atomes de carbone),
   d) des polyamines cycloaliphatiques de formule générale:

$$H_2N-R^2-NH_2 \qquad (IV)$$

(dans laquelle $R^2$ peut représenter le radical:

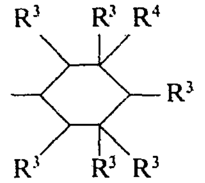 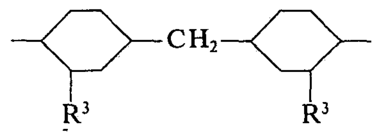 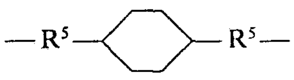

$R^3$ étant H ou $CH_3-$, $R^4$ représentant $=-CH_2-$ et $R^5$ pouvant être un radical alkylène, identique ou différent et qui peut être présent, 0, 1 ou 2 fois, et comporter 1 à 3 atomes de carbone),

e) des aminoamides et/ou des aminoamides contenant des groupes imidazolines et ayant des poids d'équivalents d'hydrogène d'amine de 90 à 175,

f) des produits de condensation phénol/formaldéhyde/amine (bases de Mannich) comportant au moins 2 atomes d'hydrogène réactifs d'amine,

g) des produits d'addition des amines selon Ca) à Cf), préparés par réaction d'un excès d'amines avec des composés glycidyliques selon A),

D) des solvants sans hydrocarbures aromatiques, et éventuellement

E) des pigments, des colorants, des accélérateurs, des diluants réactifs, des agents d'allongement et de fluidification.

2. Utilisation de mélanges de résines durcissables selon la revendication 1, caractérisée en ce que l'on utilise comme composés diglycidyliques selon A) des éthers glycidyliques à base de novolaques ayant des indices d'époxyde de 0,50 à 0,60.

3. Utilisation de mélanges de résines durcissables selon la revendication 1, caractérisée en ce que l'on utilise comme amines, selon C), de la triméthylhexaméthylènediamine monocyanéthylée, de la dipropylènetriamine, le diamino-1,12 dioxa-4,1 dodécane, l'isophorone diamine, un aminoamide à base d'un acide monocarboxylique en $C_{18}$ et de la tétraéthylènepentamine, un aminoamide à base d'acides gras dimériséset de triéthylènetétramine ou des bases de Mannich obtenues à partir du phénol, du formaldéhyde et de la triméthylhexaméthylènediamine ou du para-tertiobutylphénol, du formaldéhyde et de la triméthylhexaméthylènediamine et de la xylylènediamine.

4. Utilisation de mélanges de résines durcissables selon la revendication 1, caractérisée en ce que l'on utilise come mélanges résine/durcisseur, des mélanges de:

A) un éther diglycidylique de novolaques ayant un indice d'époxyde de 0,55 à 0,57,

B) de l'acétopropionate de cellulose, en des quantités de 1 : 1 à 1 : 3 par rapport à la quantité de résine époxyde/durcisseur, et

C) un produit d'addition de l'éther glycidylique de néopentylglycol et de la dipropylènetriamine, présentant un poids d'équivalent d'hydrogène d'amine de 71.

5. Utilisation de mélanges de résine/durcisseur selon la revendication 4, caractérisée en ce qu'à la place du durcisseur C) on utilise un mélange de dipropylènetriamine (poids d'équivalent d'hydrogène d'amine: 28) et de bases de Mannich obtenues à partir de p-tertiobutylphénol, de formaldéhyde et de triméthylhexaméthylènediamine et de xylylènediamine.

6. Utilisation de mélanges de résine/durcisseur selon la revendication 4, caractérisée en ce qu'on utilise comme durcisseur un mélange d'un produit d'addition de l'isophoronediamine et de l'éther diglycidylique de bisphénol A (indice d'époxyde: 0,52) avec l'alcool benzylique et le nonylphénol comme accélérateur, ayant un poids d'équivalent d'hydrogène d'amine du mélange de 111 ainsi que la base de Mannich obtenue à partir du p-tertiobutylphénol, du formaldéhyde et de la triméthylhexaméthylènediamine et de la xylylènediamine.

7. Utilisation de mélanges de résine/durcisseur selon la revendication 4, caractérisée en ce qu'on utilise un mélange d'un produit d'addition de l'isophoronediamine et de l'éther diglycidylique de bisphénol A (indice d'époxyde: 0,52) avec l'alcool benzylique et le nonylphénol comme accélérateur et ayant u poids d'équivalent d'hydrogène d'amine du mélange de 111 et de la dipropylènetriamine.

8. Utilisation de mélanges de résine/durcisseur selon les revendications 1 à 7, caractérisée en ce qu'on utilise comme composant cellulosique selon B) de l'acétopropionate de cellulose.

9. Procedé d'impression de surfaces, caractérisé en ce qu'on utilise comme liants des mélanges de résines selon les revendications 1 à 8.

10. Produit pour le procédé d'impression de surfaces, caractérisé en ce qu'on utilise comme liants des mélanges de résines synthétiques selon les revendications 1 à 8.